# EUROPÄISCHE PATENTSCHRIFT

(11) **EP 1 763 975 B1**
(45) Veröffentlichungstag und Bekanntmachung des Hinweises auf die Patenterteilung: **27.08.2008**
(21) Anmeldenummer: 05763103.8
(22) Anmeldetag: 06.07.2005
(51) Int. Cl.: H05B 41/28

(54) **HOCHFREQUENZ- UND HOCHSPANNUNGSSPEISEGERÄT MIT RÜCKWIRKENDER KONTROLLE**
HIGH-FREQUENCY AND HIGH-VOLTAGE SUPPLY UNIT WITH RETROACTIVE CONTROL
DISPOSITIF D'ALIMENTATION HAUTE FREQUENCE ET HAUTE PUISSANCE A CONTROLE RETROACTIF

(30) Priorität: 07.07.2004 IT BZ20040031
(43) Veröffentlichungstag der Anmeldung: 21.03.2007
(73) Patentinhaber: Stern Laser S.r.l., 39057 Appiano (BZ) (IT)
(72) Erfinder: NADALUTTI, Gianfranco, I-33010 Tavagnacco (IT); GRITTI, Massimo, I-39054 Renon (IT)
(74) Vertreter: Faraggiana, Vittorio
(86) Internationale Anmeldenummer: PCT/IB2005/001909
(87) Internationale Veröffentlichungsnummer: WO 2006/006049

(56) Entgegenhaltungen:
- EP-A- 0 108 815
- EP-A- 0 587 183
- EP-A- 1 119 223
- EP-A- 1 227 706
- US-A- 5 402 043
- US-A- 5 512 801
- US-A- 6 144 445
- US-B1- 6 541 923

## Beschreibung

Die vorliegende Erfindung bezieht sich auf ein Hochfrequenz- und Hochspannungsspeisegerät mit rückwirkender Kontrolle gemäß dem Oberbegriff des Anspruchs 1.

### Stand der Technik

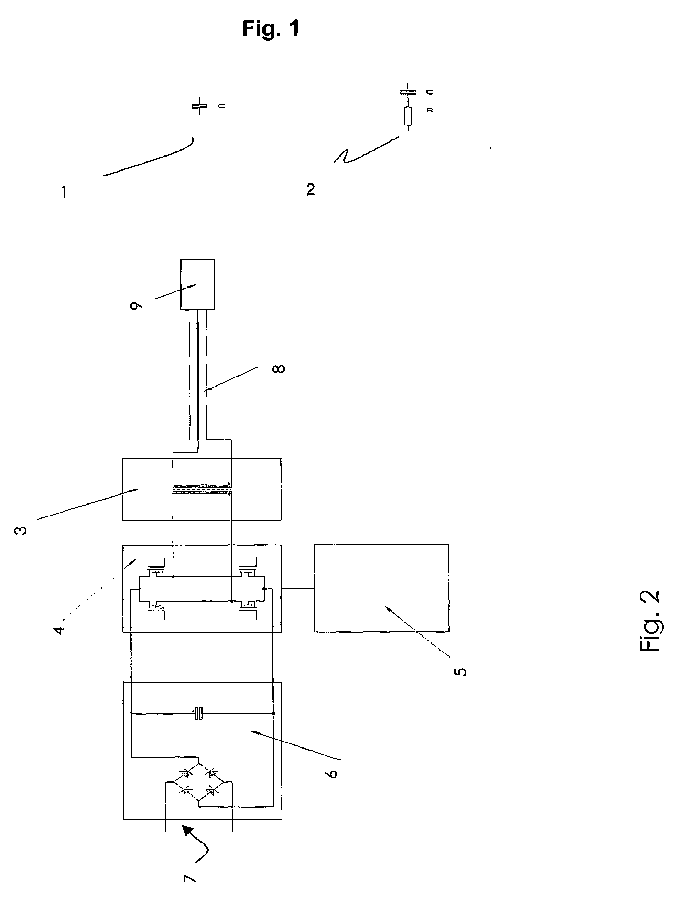

Die speisbare Excimerlampe ist den Stromkreisen wie Figur 1 entnehmbar gleichwertig, mit Werten bei eingeschalteter Lampe 1 von R von 500 Ohm bis 3500 Ohm und von C von 40 pF bis 240 pF. Bei ausgeschalteter Lampe 2 sind die werte von C von 20 pF bis 65 pF. Die bekannte Speisetechnik sieht, wie Figur 2 entnehmbar, einen Isolier- und Aufspanntransformator 3 vor, der imstande ist, eine nicht sinusförmige Spannung im Bereich von 4 KV bis 14 KV von Spitze zu Spitze und einer Frequenz von 200 KHZ bis 400 KHz zu liefern.

Der Transformator 3 wird durch den Umschaltmodul 4 üblicherweise in der doppelbrückigen Ausgestaltung, wie Figur 2 entnehmbar, angesteuert.

Der Umschaltmodul 4 wird seinerseits durch eine Kontrolleinheit 5, wie aus Figur 2 hervorgeht, gesteuert.

Der Umschaltmodul 4 wird durch einen Gleichricht- und Glättungsmodul 6 der Hauptnetzhauptspannung 7 mit Eingang manueller Auswahl und einer Aufnahme mit einem Leistungsfaktor unterhalb von 0,8, wie der Figur 2 entnehmbar, gespeist.

### Kritik am Stand der Technik

Der Aufspanntransformator 3 muss zum Ertragen der auf die Spannung von 4 KV bis 14 KV von Spitze zu Spitze zurückzuführenden Last unter besonderer Beachtung der funktionellen Isolierung über die Sicherheit hinaus dimensioniert werden.

Der Aufspanntransformator 3 muss zum Ertragen der auf die Frequenz von 200 KHz bis 400 KHz und gleichzeitig auf die Spannung von 4 KV bis 14 KV zurückzuführenden Lasten unter besonderer Beachtung bei der Senkung der Kapazitäten bemessen werden, die an der Sekundärwicklung verteilt sind. Die verteilten Kapazitäten des Transformators 3 und des Verbindungskabels 8 mit der Lampe 9 erschweren die Last des Umschaltmoduls 4, wobei übermäßige Bemessungen verlangt werden, um die parasitären Glieder zu beherrschen, die auf die Konstruktion zurückzuführen sind. Die Raumabmessungen der Speisegeräte bekannter Art sind bei Gleichheit von Merkmalen um eine Größenordnung größer als die vorgeschlagenen Erfindung.

Das Gewicht der Speisegeräte bekannter Stand der Technik ist bei Gleichheit der Merkmale viermal höher gegenüber jenem der vorgeschlagenen Erfindung.

Das Dokument US-A-5 402 043 (D4), wird als nächstliegender Stand der Technik angesehen.. Es offenbart (die Verweise in Klammern beziehen sich auf dieses Dokument) ein Hochfrequenz- und Hochspannungsspeisegerät (siehe Fig. 10) mit rückkoppelnder Kontrolle (siehe Spalte 33, Ziele 25-35), das einen Kontrollmodul (Tz, Fig. 10) und einen Umschaltmodul (FETz1a - FETz2b) umfasst, die imstande sind, eine Quadratwellenform (siehe Spalte 31, Zeile 3845) mit konstanter Amplitude und veränderliche Frequenz (siehe Spalte 1, Zeile 42-57 und Figur 12) zu erzeugen, die einen Resonanzmodul (Lz, TCz, PWz, SWz) betreibt, der seinerseits aus einem nicht aufspannenden Isoliertransformator (PWz, SWz), aus einem Induktionsmodul (Lz) und einem Kabel (OJz-CTz1 a, OTz2-CTz2b) zur Verbindung mit der Lampe (FLz1, FLz2) besteht.

Dokument EP 0 108815 (D2) beschreibt Koaxialkabel zur Verbindung mit der Lampe..

Dokument EP 0 587183 A (D1) beschreibt, dass das Koaxialkabel ein aktives Element des Resonanzmoduls selbst bildet.

Die Aufgabe der vorliegenden Erfindung ist daher die Lösung der Probleme des Standes der Technik und ein höchst widerstandsfähiges, sicheres, und höchstisoliertes Speisegerät herabgesetzter Abmessungen vorzuschlagen.

Maßnahmen um die Probleme des Standes der Technik zu beseitigen.

Diese und weitere Aufgaben werden durch die Merkmale des kennzeichnenden Teils des Anspruchs 1 gelöst.

Das Speisegerät ist geeignet, Excimerlampen im Spannungsbereich von 4 KV bis 14 KV von Spitze zu Spitze, im Frequenzbereich von 200 KHz bis 400 KHz, mit einer Wellenform im Dauerbetrieb zu speisen.

Das Speisegerät unterliegt einer Rückkoppung mit einer Stabilität der Ausgangsspannung nicht unterhalb von 3%.

Das Speisegerät nimmt einen universellen Netzeingang von 88 Vrms bis 264 Vrms im Frequenzbereich von 50 Hz bis 60 Hz an und weist eine Aufnahme mit einem Leistungsfaktor nicht unterhalb von 0,99 auf.

Es ist imstande, Excimerlampen im angegebenen Spannungs-und Frequenzbereich über einen flexiblen Koaxialkabel derart zu speisen, dass die Bedienung der Lampe im Betrieb erlaubt wird.

Es nimmt eine entfernte Einschalt- und Ausschaltsteuerung 24 an, die galvanisch isoliert ist.

Es kommuniziert mit einem außen gelegenen Rechner und übermittelt die Hauptgrößen, wie die Spannung, Frequenz und eine Reihenfolge von diagnostischen Daten vor und während des Einschaltens.

Es ist von Raumabmessungen unterhalb von 10 dm³ und wiegt weniger als 7 kg.

Der Transformator besitzt Merkmale nur einer Sicherheitsisolierung zwischen Anlegung an der Sekundärwicklung und dem Hauptstromnetz an der Primärwicklung. Er arbeitet mit Spannungen in der Größenordung der Netzspannung.

Der Transformator ist kein Aufspanntransformator und hat ein einheitliches Verhältnis der Windungen. So wird die Wirkung der verteilten Kapazitäten drastisch herabgesetzt und die Bemessung steht im Verhältnis mit der übertragenen Sollleistung.

Der Aufspanneffekt wird über einen aus einer Induktionseinheit in Serie bestehenden Resonanzmodul, der verteilten Kapazität des Verbindungskabels mit der Lampe sowie die Kapazität der Lampe selbst erhalten.

Der Umschaltmodul wird für die auf die Last übertragene Sollleistung bemessen sein.

### Beschreibung der vorgeschlagenen Einheit

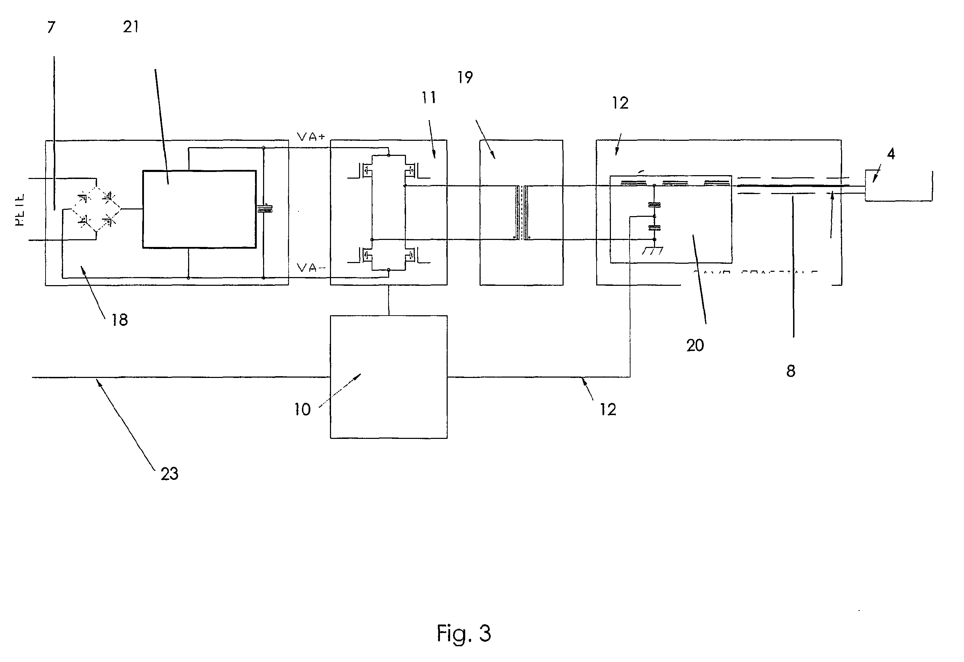

Figur 3 zeigt ein Blockschaltbild der vorgeschlagenen Einheit.

Der Kontrollmodul 10 aus Figur 3 erzeugt die periodischen Wellenformen aus Figur 5, die notwendig sind, um den Umschaltmodul aus Figur 6 zu betreiben.

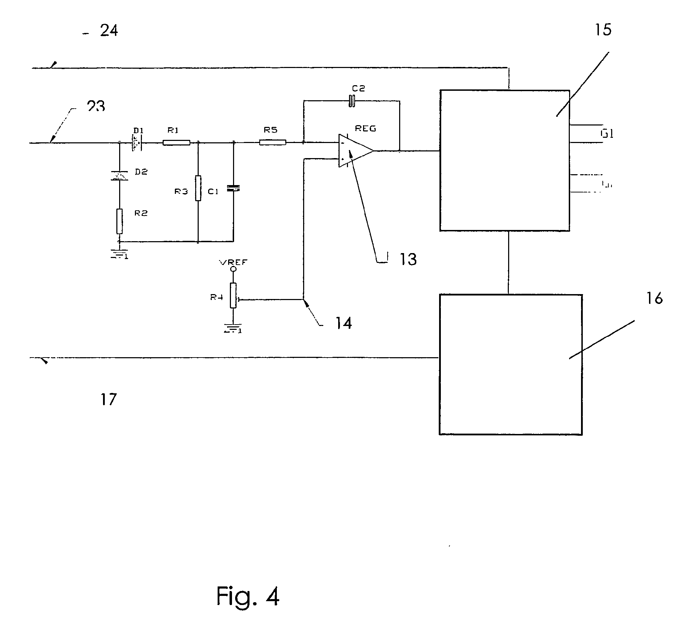

Der Kontrollmodul 10 empfängt den Set Point 14 von der Einzelheit R4 (Figur 4) und die Spannungsrückkopplung 23 vom Resonanzmodul 12 aus Figur 3. Die Rückkopplungsspannung wird über das Netz von Bestandteilen D1, D2, R1, R2, R3 und C1 aus Figur 4 geglättet und für den Analogregler 13 verfügbar gemacht.

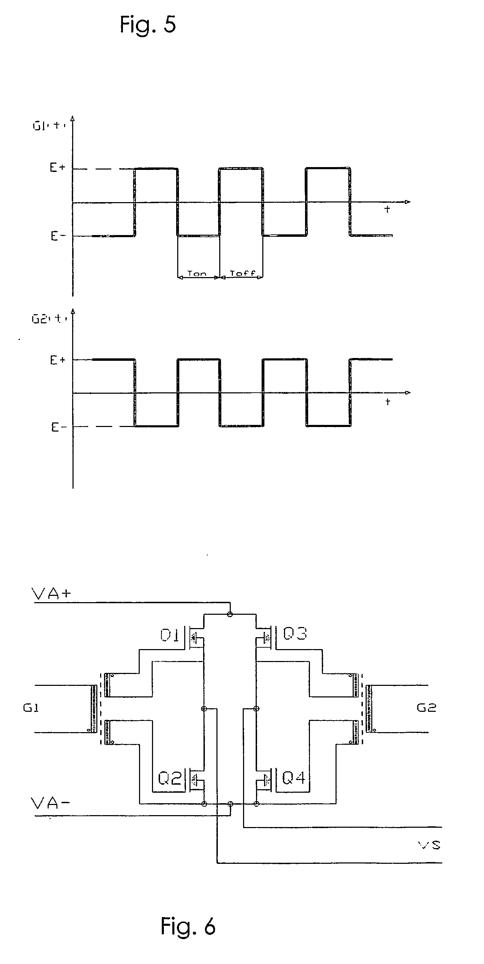

Der Analogregler 13 aus Figur 4 bearbeitet den Fehler zwischen dem Set Point 14 und der Rückkopplung 23 indem ein Spannungssignal geliefert wird, das zur Arbeitsfrequenz der Lampe 9 proportional ist. Dieses Signal steuert einen spannungskontrollierten Oszillator 15, der seinerseits die Signale G1 und G2 aus Figur 5 für die Steuerung der Schalter Q1, Q2, Q3, Q4 des Umschaltmoduls 11 aus Figur 6 erzeugt. Die Amplitude E+ und E- der Steuersignale ist eine Funktion der Art von verwendeten Schaltern.

Das Verhältnis der Einschaltzeit Ton und Abschaltzeit Toff aus Figur 5 bezüglich der Steuerwellenform der Schalter des Umschaltmoduls 11 ist fest und einheitlich.

Der kontrollierte Oszillator 15 aus Figur 4 liefert die Frequenz- und Spannungsinformation der Lampe dem Mikrokontrollgerät 16 aus Figur4, der sie ausarbeitet und auf eine von außen zugängliche Verbindungsleitung 17 überträgt.

Der kontrollierte Oszillator 15 aus Figur 4 arbeitet ein digitales, galvanisch isoliertes Außensignal mit An- und Abschaltfunktion der Lampe 9 aus.

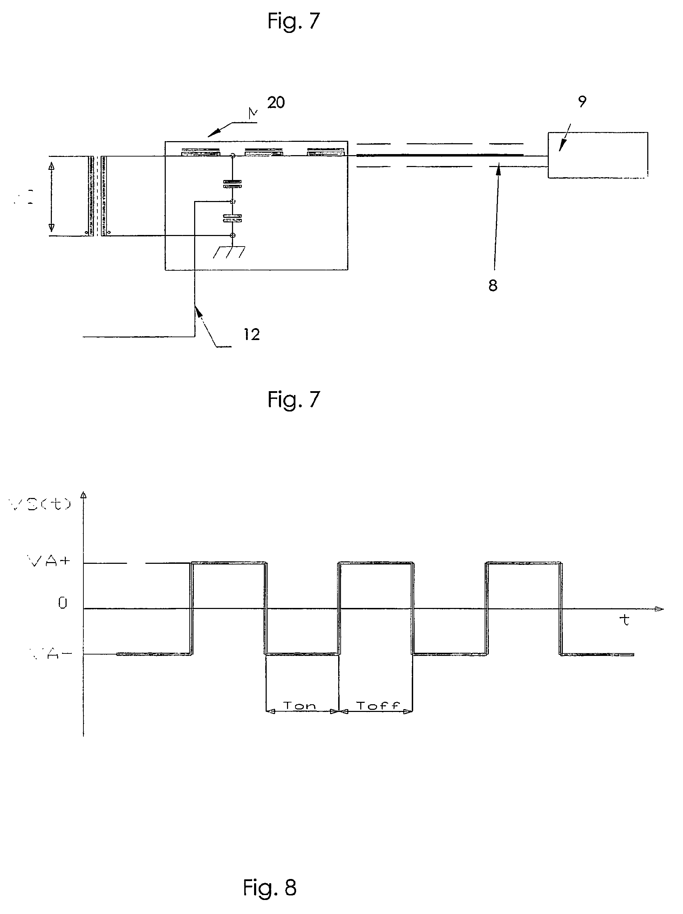

Der Umschaltmodul 11 aus Figur 6 betreibt mit der Quadratwellenform VS(t) aus Figur 8 mit konstanter Amplitude und veränderlicher Frequenz den Resonanzmodul 12 aus Figur 3.

Die Spannung V besitzt einen Mittelwert Null und nimmt Spitzenwerte VA+ und VA-, wie aus Figur 8 hervorgeht, an. Sie stammen vom Ausricht- und Glättungsmodul 18 aus Figur 3 ab, der dem Umschaltmodul 11 aus Figur 6 die kontinuierliche Speisung (VA+) - (VA-), normalerweise von etwa 400 V liefert.

Der Isoliertransformator 19 betreibt über die Sekundärwicklung den Resonanzmodul 12 aus Figur 3, mit demselben Spannungswerten VA+ und VA- der Primärwicklung.

Der Resonanzmodul 12 aus Figur 3 besteht aus einer, normalerweise durch ein wärmezerstreuendes Harz isolierten Induktionseinheit 20, aus dem Koaxialkabel 8 zur Verbindung mit der Lampe 9 und aus der Lampe 9 selbst.

Basis der Erfindung ist gegeben durch die Verwendung des Koaxialkabels 8 zur Verbindung mit der Lampe als aktives Element des Resonanzmoduls 12.

Die Induktionseinheit 12 aus Figur 7 bewirkt die sinusförmige Speisung der Lampe 9.

Durch den Resonanzmodul bzw. die Induktionseinheit 12 aus Figur 7 wird über einen kapazitiven Teiler die Spannungsrückkopplung 23 am Ausgang gegeben, die nachfolgend durch die Analogschaltung aus Figur 4 ausgearbeitet wird.

Der Umschaltmodul 11 aus Figur 6 wird durch den Ausricht-und Glättungsmodul 18 aus Figur 3 gespeist, der die Netzspannung am Eingang in eine konstante Gleichspannung umwandelt.

Der Richt- und Glättungsmodul 18 aus Figur 3 nimmt den Strom in Phase mit der Netzspannung am Eingang auf, wobei für die automatische Korrektur 21 des Leistungsfaktors vorgesehen wird.

## Patentansprüche

1. Hochfrequenz- und Hochspannungsspeisegerät mit rückwirkender Kontrolle, das einen Kontrollmodul (Figur 4) und einen Umschaltmodul (Figur 6) umfasst, die imstande sind eine Quadratwellenform mit konstanter Amplitude und veränderlicher Frequenz (Figur 8) zu erzeugen, die einen Resonanzmodul (Figur 7) betreibt, der seinerseits aus einem nicht aufspannenden Isoliertransformator, aus einem Induktionsmodul und einem Koaxialkabel zur Verbindung mit der Lampe besteht, wobei der Koaxialkabel ein aktives Element des Resonanzmoduls selbst bildet, **dadurch gekennzeichnet, dass** es geeignet ist, Excimerlampen im Spannungsbereich von 4 KV bis 14 KV von Spitze zu Spitze, im Frequenzbereich von 200 KHz bis 400 KHz mit Sinuswellenform im kontinuierlichen Betrieb zu speisen.

2. Speisegerät nach Anspruch 1, **dadurch gekennzeichnet, dass** es ein Ausricht- und Glättmodul (18) mit automatischer Korrektion (21) des Leistungsfaktors und an einem universalen Netzeingang (7, Figur 3) umfasst.

3. Speisegerät nach Anspruch 2, **dadurch gekennzeichnet, dass** es einen Ausricht- und Glättmodul (18) mit einem manuell wählbaren Eingang und ohne Korrektion des Leistungsfaktors umfasst.

4. Speisegerät nach Anspruch 2, **dadurch gekennzeichnet, dass** es eine Kontrolleinheit mit Mikrokontrollgerät (16) mit Diagnose- und Überwachungsfunktion der Merkmale der Lampe (9)umfasst.

5. Speisegerät nach Anspruch 3, **dadurch gekennzeichnet, dass** es einen Kontrollmodul mit Mikrokontrollgerät (16) mit Diagnose- und Überwachungsfunktion der Merkmale der Lampe umfasst.

## Claims

1. A high-frequency and high-voltage supply unit with retroactive control comprising a control module (Fig. 4) and a switching module (Fig. 6) capable of generating a square waveform of constant amplitude and varying frequency (Fig. 8) operating a resonant module (Fig. 7) in turn made up of an isolation non step-up transformer, an inductive module and a coaxial cable for connection to the lamp, the coaxial cable being an active element of the resonant module, **characterised in that** it is adapted to power excimer lamps in the voltage range of 4KV to 14 KV peak-to-peak, in the frequency range of 200 KHz to 400 KHz, with sinusoidal waveform in continuous operation.

2. A supply unit as claimed in claim 1, **characterised in that** it comprises a rectification and equalisation module (18) with automatic correction (21) of the power factor and universal network input (7, Fig. 3).

3. A supply unit as claimed in claim 1, **characterised in that** it comprises a rectification and equalisation module (18) with manual-selection input without correction of the power factor.

4. A supply unit as claimed in claim 2, **characterised in that** it comprises a control module with micro-controller (16) having a diagnostic and monitoring function of the lamp (9) features.

5. A supply unit as claimed in claim 3, **characterised in that** it comprises a control module with micro-controller (16) having a diagnostic and monitoring function of the lamp features.

## Revendications

1. Dispositif d'alimentation haute fréquence et haute puissance à contrôle rétroactif, comprenant un module de contrôle (figure 4) et un module de commutation (figure 6) en mesure d'engendrer une forme d'onde carrée d'amplitude constante et fréquence variable (figure 8) faisant fonctionner un module résonant (figure 7) se composant à son tour d'un transformateur d'isolement non élévateur, d'un module inductif et d'un câble coaxial de liaison de la lampe, le câble coaxial étant un élément actif du module résonant, **caractérisé en ce qu'**il est apte à alimenter des lampes excimer dans la gamme de tension de 4 KV à 14 KV crête-à-crête, dans la gamme de fréquence de 200 KHz à 400 KHz, avec forme d'onde sinusoïdale en fonctionnement continu.

2. Dispositif d'alimentation selon la revendication 1, **caractérisé en ce qu'**il comprend un module de rectification et égalisation (18) avec correction automatique (21) du facteur de puissance et entrée de réseau universelle (7, figure 3).

3. Dispositif d'alimentation selon la revendication 1, **caractérisé en ce qu'**il comprend un module de rectification et égalisation (18) avec entrée à sélection manuelle et sans correction du facteur de puissance.

4. Dispositif d'alimentation selon la revendication 2, **caractérisé en ce qu'**il comprend un module de contrôle avec micro-contrôleur (16) ayant pour fonction de diagnostiquer et surveiller les caractéristiques de la lampe (9).

5. Dispositif d'alimentation selon la revendication 3, **caractérisé en ce qu'**il comprend un module de contrôle avec micro-contrôleur (16) ayant pour fonction de diagnostiquer et surveiller les caractéristiques de la lampe.
